# EUROPEAN PATENT SPECIFICATION

(11) **EP 1 901 600 B1**
(45) Date of publication and mention of the grant of the patent: **08.02.2012**
(21) Application number: 06742460.6
(22) Date of filing: 12.06.2006
(51) Int. Cl.: A01B 49/06, A01B 13/02, A01C 23/00

(54) **AN APPARATUS AND A METHOD FOR TILLAGE USING RIDGES**
VORRICHTUNG UND VERFAHREN ZUR BODENBEARBEITUNG UNTER VERWENDUNG VON FURCHEN
APPAREIL ET PROCEDE POUR LE LABOUR PAR LE BIAIS DE BILLONS

(30) Priority: 12.06.2005 DK 200500850
(43) Date of publication of application: 26.03.2008
(73) Proprietor: Stolberg-Rohr, Michael, 7700 Thisted (DK)
(72) Inventor: Stolberg-Rohr, Michael, 7700 Thisted (DK)
(74) Representative: Joergensen, Bjoern Barker
(86) International application number: PCT/DK2006/000328
(87) International publication number: WO 2006/133697

(56) References cited:
- DE-A1- 3 931 503
- DE-A1- 19 739 236
- DE-A1- 19 748 095
- DE-C- 753 575
- US-A- 5 660 126
- US-A1- 2003 178 209
- US-B1- 6 382 114

## Description

The present invention relates to a method of tillage using ridges and an apparatus for carrying out a method of tillage using ridges.

New experiments in Denmark with maize and other crops on ridges have yielded remarkably positive results in the crop year 2004. Ridge tillage systems have found some application in the Corn Belt in the Mid-West of the United States. Ridging the soil reduces nitrogen leaching, and increases the soil temperature. The ridges make it possible to control weeds without the use of or with reduced use of chemicals, and ridge tillage is therefore of interest, not least to organic farmers.

However, the ideal system for ridge tillage is not commercially available. At a few machine pools in Denmark, they have themselves coupled together machines for the 2005 season into a unit consisting of a ridge plough, a ridge shaper and a seeder. It has also been attempted to form ridges in connection with slurry manure spreading.

US patents US-A-5 660 126, US-A-4 377 979 and US-A-4 974 683 are examples of patented inventions relating to ridge tillage. Thus, US-A-5 660 126 describes an apparatus and a method whereby seeds are sown in the soil underneath the surface, and a ridge is scraped together and formed on the surface. The seed is sown at a lesser depth than normal, corresponding to the height of the ridge, which is 1"-1½" high (2.5-3.8 cm high). The apparatus also comprises means for placing fertilizer. From US-A-6 382 114 is known a method and apparatus whereby the steps of tilling, application of liquid fertilizer and planting are combined into a single operation.

When sowing or planting, it is generally not desirable to place the seed or the young plants in the residue of the previous crop as such residue may be contaminated and may thus impede the growth of the new crop. Therefore, for example, according to US-A-5-660 126, the seeds are placed under the soil surface and under the ridge, which is formed from residue from the previous crop and the very top layer of the soil.

A machine capable of ploughing, ridging, delivering and placing slurry manure in the ridge itself and possibly placing starter fertilizer and band spraying in connection with the sowing or laying/planting of a crop, preferably maize, in a single operation, is currently not commercially available.

In a maize field, slurry manure is typically injected by means of a slurry tanker with an attached slurry injector. After the slurry injection, the field is normally ploughed. After injection and subsequent ploughing, the slurry manure lies about 10 cm down in the soil. The slurry manure is lying in bands, which delays denitrification, but the slurry manure is not necessarily placed relative to the subsequent sowing/planting or laying. After ploughing, the field is normally harrowed once or twice, whereupon, for example, maize is sown by means of a single-seeder. Starter fertilizer is normally placed in connection with the sowing. The starter fertilizer may be solid or liquid and is placed 5 cm below and 5 cm beside the seed.

Establishment of a maize field normally requires five passes with a tractor and implement operated by an operator. The more the field is driven on, the greater is the danger of harmful soil compaction. A reduction in the number of field operations reduces the risk of harmful soil compaction.

The purpose of the present invention is to overcome at least some of the prior-art disadvantages in connection with ridge tillage.

This is obtained by a method which is characterised in that slurry manure is delivered and placed, the soil is ploughed up, ridges are shaped and a crop is placed in the ridges in a single operation, and by an apparatus which is characterised in that a slurry injector, a ridging plough, a ridge shaper and sowing, laying or planting equipment are coupled together into a unit.

The invention makes is possible in a single operation to place the slurry manure, shape the ridge and immediately afterwards to sow, lay or plant a crop. Thereby, substantial labour savings, an added yield, a reduction in fertilizer and thus a lower nitrogen loss are obtained.

The invention provides a method of concurrent ploughing up, ridge shaping, delivery and placement of slurry manure and possibly placement of starter fertilizer as well as sowing or laying/planting of a crop, preferably maize, on ridges, all in a single operation. Coupling together a slurry injector, a ridging plough, a ridge shaper and a single-seeder establishes a method which ensures that everything is performed in a single operation as the sowing equipment for the relevant crop may be fitted with equipment for the placement of solid or liquid fertilizer, and finally band spraying equipment may be mounted.

The method will attract great attention from authorities, farmers as well as machine pools as the invention implies advantages in terms of the environment, farming safety, rational operation as well as economy.

An apparatus according to the invention may consist in implement components known *per se,* which are combined in a new way into an aggregate unit and in an order that provides new possibilities for growing, for example, maize on ridges on both conventional and organic farms because the new aggregate implement ensures that all work routines are performed in a single operation.

By this method, the crop is preferably placed in one of the following ways: sowing of seeds, single-seed sowing, laying of tubers, bulbs or roots and planting of plants.

In the method according to the invention, slurry manure placement and soil ploughing are advantageously performed alternately at least twice. This makes it possible to place more slurry manure in each ridge so that the needs of highly fertilizer-demanding crops, such as maize, can be satisfied.

According to the invention, the ridges may be shaped with an upwardly pointed cross-section. This makes it difficult for birds, such as rooks, to balance on the ridge and pick newly-sown seeds.

An apparatus according to the invention may be designed in that an aggregate implement is hitched to the rear of a trailed or automotive slurry tanker, the aggregate implement including a slurry injector with a number of adjustable tines with associated slurry pipes which, because of their adjustability, can place the slurry manure anywhere in the ridge and in the number of bands desired.

Moreover, an apparatus according to the invention may be designed in that an aggregate implement is hitched to the rear of a trailed or automotive slurry tanker, the aggregate implement comprising a slurry injector with succeeding first ploughs and main plough as well as a ridge shaper, and the implement has integral sowing, laying or planting equipment for seeds, tubers, bulbs, roots or plants.

In an apparatus according to the invention, equipment for placing solid or liquid fertilizer may be arranged in connection with the sowing, laying or planting equipment. Thereby, starter fertilizer may be placed near the seed in addition to the slurry manure in the ridge.

The apparatus according to the invention preferably comprises, in the order stated: injector pipes for slurry manure, a first plough, further injector pipes for slurry manure, a main plough, a ridge shaper and sowing, laying or planting equipment. By providing injector pipes for slurry manure, followed during operation by a first plough, which will turn soil over the slurry manure placed, and succeeding injector pipes for slurry manure followed by the main plough, which will turn further soil over the slurry manure injected in two operations, a very large ridge may be obtained with a very high content of slurry manure. Through the use of ploughs, fresh soil, that is, soil not contaminated by residue from the previous crop, is brought to the top of the ridge. This provides good growth conditions for the new crop up in the ridge.

In a preferred embodiment, the ridge shaper comprises hourglass-shaped rollers. These rollers may have oppositely adjacent conical sections. This provides a ridge with a pointed profile making it difficult for birds, such as rooks, to balance on the ridge and pick newly sown seeds.

The invention will now be described in more detail below by means of examples of embodiments and with reference to the schematic drawing, in which
Fig. 1 shows a cross-section of a ridge produced by the method according to the invention,
Fig. 2 is a side view of an apparatus according to the invention,
Fig. 3 is a perspective view of the apparatus of Fig. 2,
Fig. 4 is a perspective view of a variant of the apparatus of Figs. 2 and 3,
Fig. 5 is a longitudinal view of the ridge shaper and sowing component of the apparatus of Fig. 4,
Fig. 6 shows a front view of the ridge shaper and sowing component of Fig. 5,
Fig. 7 shows a rear view of the ridge shaper and sowing component of Fig. 5,
Fig. 8 shows a front view of a variant of a pair of ridge shaper wheels,
Fig. 9 shows a perspective view of the ridge shaper wheels of Fig. 8, and
Fig. 10 shows a cross-section of an alternative ridge.

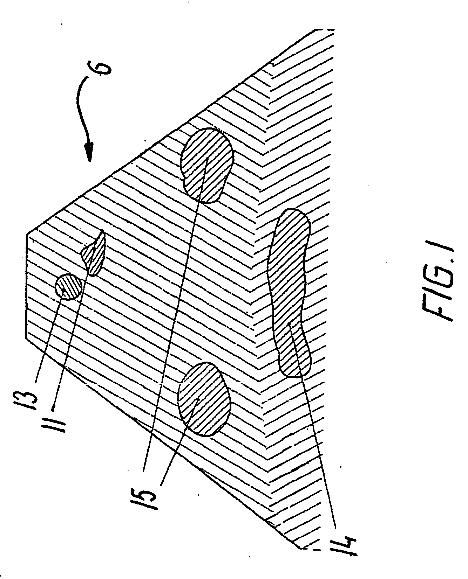

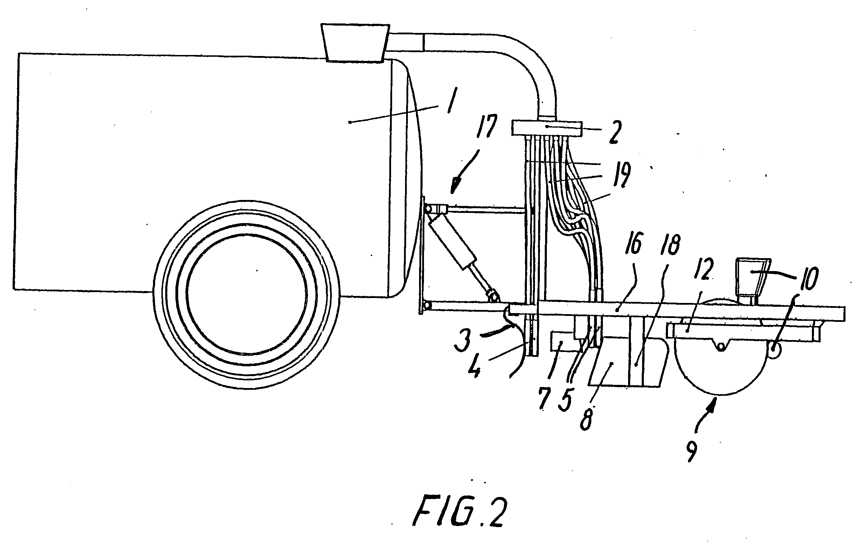

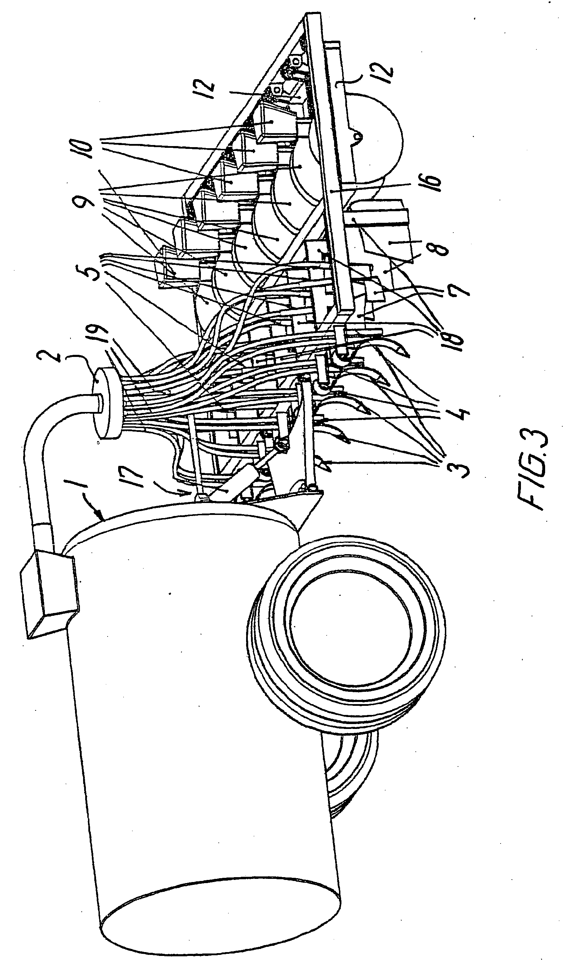

Figs. 2 and 3 show an apparatus built on the basis of an ordinary Slurry tanker 1 with distributor equipment 2, which distributes slurry manure to a number of harrow tines 3 through slurry pipes or injector pipes 4, 5 depending on the desired number of slurry bands in a ridge 6 (Fig. 1). Together, the slurry tanker 1, the distributor equipment 2 and the injector pipes 4, 5 constitute a slurry injector. The apparatus can place the slurry manure in the ridge in one or more bands placed at a selected depth. First ploughs 7 and main or ridge-forming ploughs 8 are mounted after the harrow tines 3 to prepare for the actual ridge shaping, which is carried out by a ridge shaper 9, which is designed to form a ridge of the size, shape and firmness required by the individual crop. Sowing, laying or planting equipment in the form of a single-seeder 10 is arranged after the ridge shaper. Equipment for placing artificial fertilizer 11 (Fig. 1) (starter fertilizer) may be mounted together with the sowing equipment. The ridge shaper 9 and the sowing equipment 10 are placed in the same pivoting frame 12, which ensures that seeds 13 (Fig. 1) are placed accurately in the ridge 6.

Fig. 1 shows a cross-section of the ridge 6 after it has been formed. A slurry band 14 has been placed in the bottom part of the ridge and has just been covered by the soil pushed in by the first ploughs 7. Slurry manure has been placed in two bands 15 higher up in the ridge 6. The lowermost, broad slurry band 14 has been injected by means of the first injector pipes 4 arranged immediately behind the harrow tine 3, and the higher-lying slurry bands 15 have been injected by means of the injector pipes 5 arranged behind the first ploughs 7. The seed is placed at the desired depth, for example 6 cm below the top of the ridge 6, and starter fertilizer 11, if used, is placed slightly deeper and slightly to the side relative to the seed 13.

Summarizing, the implement shown in Figs. 2 and 3 works in the following way:
The slurry tanker 1 is driven across the field pulling harrow tines 3, injector pipes 4, 5, ploughs 7, 8, ridge shaper 9 and sowing equipment 10 after it. In that way, the soil is first tilled by the harrow tines 3. Immediately afterwards, the broad slurry band 14 is placed by the first injector pipes 4, which are arranged in pairs and relatively closely together to be able to inject the broad slurry band 14.

The broad slurry band 14 is covered by soil turned or ploughed up by the first ploughs 7. It is understood that the soil ploughed up by the first ploughs 7 comprises the top layer of soil with residue of the previous crop, if any, from the areas between the ridges formed by the apparatus.

After the first ploughs 7, the second injector pipes 5 place the two further slurry bands 15, which are immediately afterwards covered by soil turned or ploughed up by the main ploughs 8. It is understood that the main ploughs 8 plough up soil which lies deeper than the soil ploughed up by the first ploughs 7 and which is therefore substantially free of residue of the previous crop.

The ridge formed by the ploughs 7, 8 is shaped by the subsequent ridge shaper 9, and the sowing equipment 10 places seeds 13 and starter fertilizer 11, if used, at the top of the ridge at the usual sowing depth (about 6 cm) below the top of the ridge.

The ridge shown in Fig. 1, for example, has a height of about 35-40 cm and a bottom width of about 75 cm.

It is understood that the apparatus of Figs. 2 and 3 comprises a harrow tine 3 for each ridge formed at a pass of the field. A first pair of injector pipes 4 and a second pair of injector pipes 5 follow after each harrow tine 3. The first ploughs 7 and the main ploughs 8 each comprise ploughshares arranged symmetrically relative to the respective ridges so that the ridges become symmetrical.

Together with harrow tines 3, injector pipes 4, 5 and ploughs 7, 8, the pivoting frame 12 of the ridge shapers 9 and the sowing equipment 10 is mounted on a main frame 16, which is hitched to the slurry tanker 1 by means of a three-point linkage 17. The first ploughs 7, the second injector pipes 5 and the main ploughs 8 are mounted together on a swingable beam 18. Slurry hoses 19 connect the distributor equipment 2 with the injector pipes 4, 5.

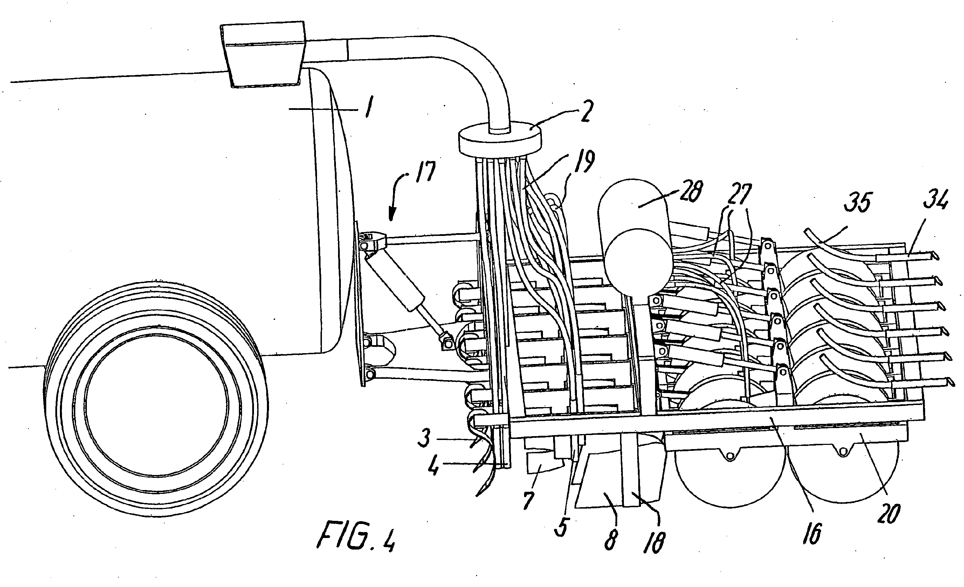

Fig. 4 shows a preferred variant of an apparatus according to the invention. As in the embodiment of Figs. 2 and 3, a main frame 16 is connected with a slurry tanker 1 by means of a three-point linkage 17. Elements of Fig. 4 which are designed in the same way and have the same function as corresponding parts of Figs. 2 and 3 have the same reference numerals.

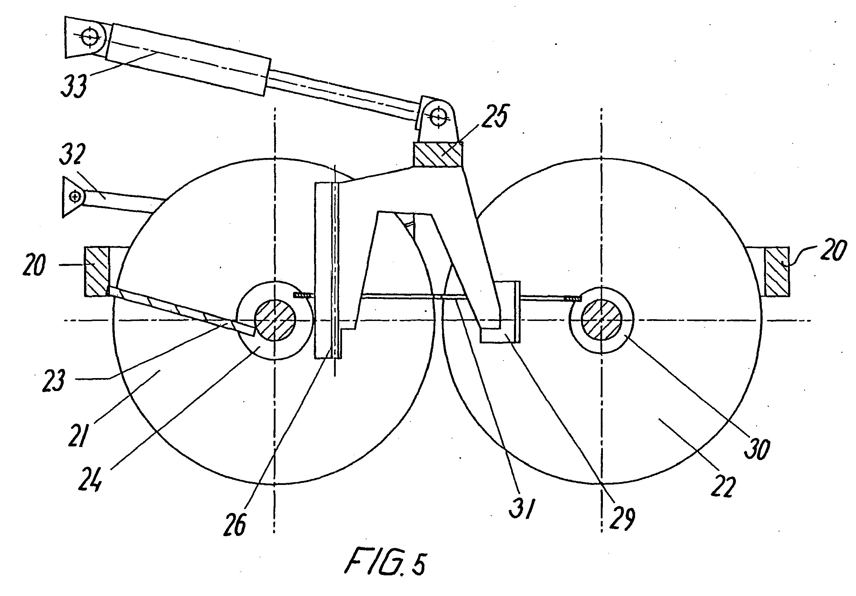

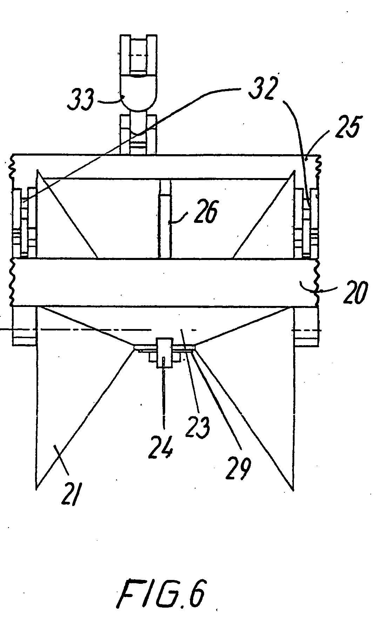

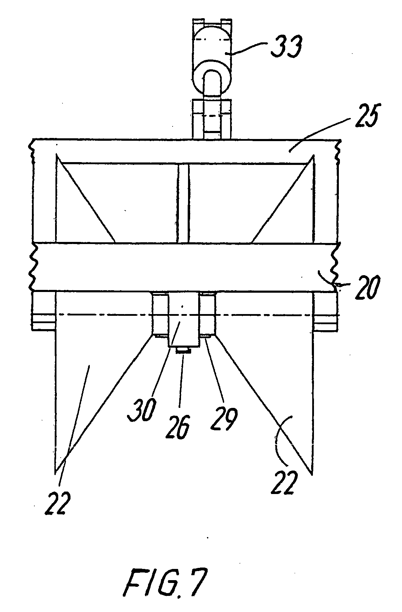

The ridge shaper 9' is designed somewhat differently from the one in Figs. 2 and 3 and is also shown in more detail in Figs. 5, 6, and 7. Thus, the ridge shaper 9' comprises a frame 20 carrying pairs of front ridge shaper wheels 21 and rear ridge shaper wheels 22. As in the first embodiment, the ridge shaper wheels 21, 22 are conical wheels with the narrow ends opposite to each other to provide the desired ridge shape together (Fig. 1). A soil guide plate 23 is arranged between the front ridge shaper wheels 21 in front of their axis of rotation, and a sowing drill former 24 is arranged between the front ridge shaper wheels 21 and coaxially with their axis of rotation to form a sowing drill at the top of the ridge.

The frame 20 has an intermediate cross member 25 supporting sowing pipes 26, which receive seed through hoses 27 from a central metering unit 28 of a type known *per se.* Through the sowing pipes 26, seeds 13 are placed in the sowing drills formed by the sowing drill formers 24.

A scraper 29 is placed behind the sowing pipes 26 for covering the sowing drills during operation, and the central area 30 between the rear ridge shaper wheels 22 compacts the soil above the seed 13 during operation.

A soil scraper plate 31 is arranged between the two pairs of ridge shaper wheels 21, 22 to keep the ridge shaper wheels 21, 22 clean of soil.

The frame 20 is suspended from the main frame 16 of the apparatus by means of suspension arms 32 and hydraulic cylinders 33.

As a supplement to the injector pipes 4, 5, anti-sand drift slurry pipes 34 may be provided and supplied via hoses 35 connected to the distributor equipment 2.

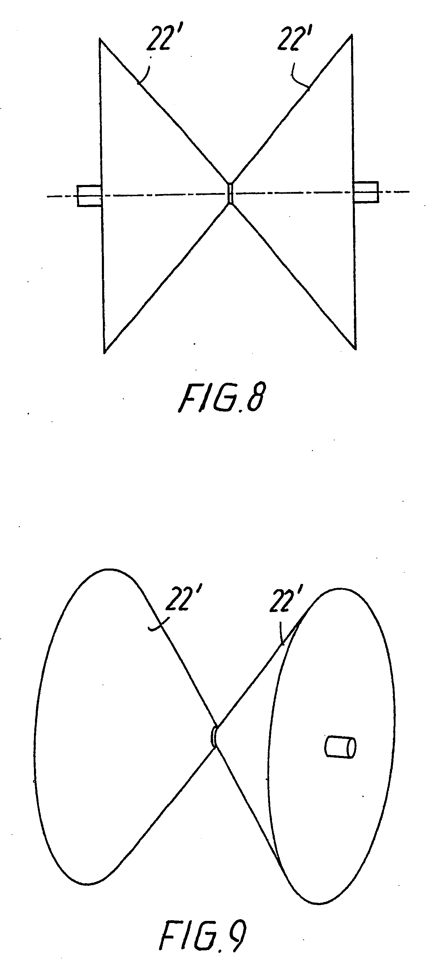

Figs. 8 and 9 show an alternative variant of the rear pair of ridge shaper wheels 22'. As shown by these figures, the conical sections 36 of the ridge shaper wheels meet so that the ridge shaper wheels 22' will form a ridge with a pointed top which will make it difficult for birds to sit on the ridge and eat the seeds just sown.

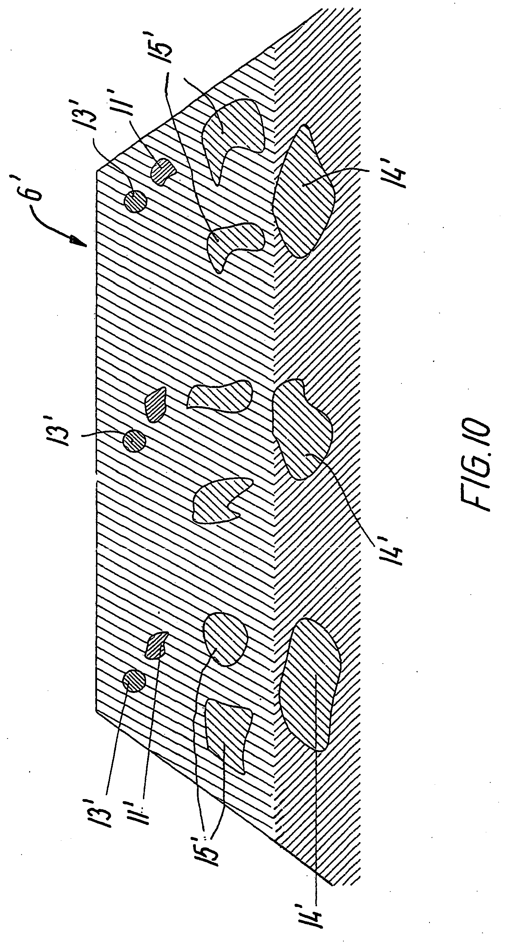

It is anticipated according to the invention that, as shown in Fig. 10, it is possible to form broad ridges 6' comprising a number of rows of seed 13', slurry bands 14', 15' and starter fertilizer 11', if used. As in the ridge 6 discussed above, the broad ridges 6' will be formed by lower slurry bands 14' being placed and covered by means of a first plough, whereupon the upper slurry bands 15' are placed and covered by means of a main plough, whereupon seeds 13' with starter fertilizer 11', if used, are sown at the top of the ridge 6'.

It should be understood that the invention has been described here with reference to special preferred embodiments, but that the invention is not limited to such embodiments, as a person skilled in the art will easily be able to realise alternatives to the various elements forming part of the apparatus described. Slide members whose bottom surface is formed so as to provide the same profile may, for example, be used instead of ridge shaper wheels. Such slide members may possibly be combined with ridge shaper wheels so that a slide member will initially shape the ridge in a way corresponding to the front ridge shaper wheels in the embodiment shown in Fig. 4, whereupon a set of ridge shaper wheels corresponding to the rear ridge shaper wheels of Fig. 4 will complete the shaping of the ridge.

## Claims

1. A metho of tillage using ridges (6), **characterized in that** slurry manure (14) is delivered and placed, the soil is ploughed up, ridges are shaped and a crop (13) is placed in the ridges in a single operation thereby providing ridges of soil, containing slurry manure and a crop.

2. A method according to claim 1, **characterized in that** the crop is placed in one of the following ways: sowing of seeds, single-seed sowing, laying of tubers, bulbs or roots and planting of plants.

3. A method according to claim 1 or 2, **characterized in that** the slurry manure placement and soil ploughing are performed alternately at least twice.

4. A method according to any one of claims 1 to 3, **characterized in that** slurry manure and crop are placed in more rows in a ridge.

5. A method according to any one of claims 1 to 3, **characterized in that** the ridges are shaped with an upwardly pointed cross-section.

6. An apparatus for carrying out a method tillage using ridges, **characterized in that** a slurry injector, (1, 2, 4, 5), a ridging plough (7, 8), a ridge shaper (9) and sowing, laying or planting equipment (10) are coupled together into a unit to provide for making in a single operation, ridges of soil, containing slurry manure and a crop.

7. An apparatus according to claim 6, **characterized in that** an aggregate implement is hitched to the rear of a trailed or automotive slurry tanker, the aggregate implement including a slurry injector with a number of adjustable tines with associated slurry pipes which, because of their adjustabillty, can place the slurry manure anywhere in the ridge and in the number of bands desired.

8. An apparatus according to claim 6 or 7, **characterized in that** an aggregate implement is hitched to the rear of a trailed or automotive slurry tanker, the aggregate implement comprising a slurry injector with succeeding first ploughs and main plough as well as ridge shaper, and that the implement has integral sowing, laying or planting equipment for seeds, tubers, bulbs, roots or plants.

9. An apparatus according to any one of claims 6 to 8, **characterized in that** equipment for placing solid or liquid fertilizer is arranged in connection with the sowing, laying or planting equipment.

10. An apparatus according to any one of claims 6 to 9, **characterized in that** it comprises in the order stated: injector pipes for slurry manure, a first plough, further injector pipes for slurry manure, a main plough, a ridge shaper and sowing, laying or planting equipment.

11. An apparatus according to any one of claims 6 to 10, **characterized in that** the ridge shaper comprises hourglass-shaped rollers.

12. An apparatus according to claim 11, **characterized in that** the hourglass-shaped rollers have oppositely adjacent conical sections.

## Patentansprüche

1. Verfahren zur Bodenbestellung unter Verwendung von Kämme (6),
**dadurch gekennzeichnet, dass** in einem einzigen Vorgang Flüssigmist (14) zugeführt und platziert, der Boden umgepflügt, Kämme gezogen sowie eine Feldfrucht (13) in den Kämmen platziert werden, so dass Bodenkämme gebildet werden, in denen sich Flüssigmist und eine Feldfrucht befinden.

2. Verfahren nach Anspruch 1,
**dadurch gekennzeichnet, dass** die Feldfrucht in einer der folgenden Weisen platziert wird: Säen von Samen, Einzelkorn-Aussaat, Einlegen von Knollen, Zwiebeln oder Wurzeln und Pflanzen von Pflanzgut.

3. Verfahren nach Anspruch 1 oder 2,
**dadurch gekennzeichnet, dass** die Flüssigmist-Platzierung und das Umpflügen des Bodens abwechselnd mindestens zwei Mal erfolgen.

4. Verfahren nach einem der Ansprüche 1 bis 3,
**dadurch gekennzeichnet, dass** Flüssigmist und Feldfrucht in mehreren Reihen in einem Kamm platziert werden.

5. Verfahren nach einem der Ansprüche 1 bis 3,
**dadurch gekennzeichnet, dass** die Kämme eine im Querschnitt spitz nach oben zulaufende Formgebung erhalten.

6. Vorrichtung zum Ausführen eines Verfahrens zur Bodenbestellung unter Verwendung von Kämme,
**dadurch gekennzeichnet, dass** eine Gülle-Einspritzeinrichtung (1, 2, 4, 5), eine Kämme bildende Pflugeinrichtung (7, 8), eine Kamm-Formgebungseinrichtung (9) sowie Gerätschaften (10) zum Säen, Einlegen oder Pflanzen in Form einer Einheit miteinander gekoppelt sind, so dass in einem einzigen Vorgang Bodenkämme gebildet werden können, die Flüssigmist und eine Feldfrucht enthalten.

7. Vorrichtung nach Anspruch 6,
**dadurch gekennzeichnet, dass** ein Geräteaggregat an das hintere Ende eines gezogenen oder selbstfahrenden Gülletankers angehängt ist, wobei das Geräteaggregat eine Gülle-Einspritzeinrichtung mit einer Anzahl von einstellbaren Zinken mit zugeordneten Güllerohren aufweist, die aufgrund ihrer Verstellbarkeit den Flüssigmist an einer beliebigen Stelle in dem Kamm sowie in der gewünschten Anzahl von Bändern platzieren können.

8. Vorrichtung nach Anspruch 6 oder 7,
**dadurch gekennzeichnet, dass** ein Geräteaggregat an das hintere Ende eines gezogenen oder selbstfahrenden Gülletankers angehängt ist, wobei das Geräteaggregat eine Gülle-Einspritzeinrichtung mit aufeinander folgenden ersten Pflugeinrichtungen und einer Hauptpflugeinrichtung sowie einer Kamm-Formgebungseinrichtung aufweist, und dass das Geräteaggregat integrale Sä-, Einlege- oder Pflanzgerätschaften für Samen, Knollen, Zwiebeln, Wurzeln oder Pflanzen aufweist.

9. Vorrichtung nach einem der Ansprüche 6 bis 8,
**dadurch gekennzeichnet, dass** Gerätschaften zum Platzieren von festem oder flüssigem Dünger in Verbindung mit den Sä-, Einlege- und Pflanzgerätschaften vorgesehen sind.

10. Vorrichtung nach einem der Ansprüche 6 bis 9,
**dadurch gekennzeichnet, dass** sie folgende Einrichtungen in der genannten Reihenfolge aufweist: Einspritzrohre für Flüssigmist, eine erste Pflugeinrichtung, weitere Einspritzrohre für Flüssigmist, eine Hauptpflugeinrichtung, eine Kamm-Formgebungseinrichtung sowie Sä-, Einlege- oder Pflanzgerätschaften.

11. Vorrichtung nach einem der Ansprüche 6 bis 10,
**dadurch gekennzeichnet, dass** die Kamm-Formgebungseinrichtung sanduhrförmige Rollen aufweist.

12. Vorrichtung nach Anspruch 11,
**dadurch gekennzeichnet, dass** die sanduhrförmigen Rollen einander gegenüberliegende benachbarte konische Bereiche aufweisen.

## Revendications

1. Procédé de travail du sol à l'aide de billons (6), **caractérisé par le fait que** du lisier (14) est déversé et épandu, le sol est labouré, des billons sont mis en forme et un produit de récolte (13) est implanté dans lesdits billons, en une unique opération, ce qui procure des billons de terrain renfermant du lisier et un produit de récolte.

2. Procédé selon la revendication 1, **caractérisé par le fait que** le produit de récolte est implanté par l'un des modes suivants : semence de graines, ensemencement monograine, enfouissement de tubercules, de bulbes ou de racines, et repiquage de plants.

3. Procédé selon la revendication 1 ou 2, **caractérisé par le fait que** l'épandage du lisier, et le labourage du sol, sont exécutés au moins deux fois de manière alternée.

4. Procédé selon l'une quelconque des revendications 1 à 3, **caractérisé par le fait que** du lisier et un produit de récolte sont disposés en plusieurs rangées dans un billon.

5. Procédé selon l'une quelconque des revendications 1 à 3, **caractérisé par le fait que** les billons sont configurés avec section transversale pointant vers le haut.

6. Appareil pour la mise en oeuvre d'un procédé de travail du sol à l'aide de billons, **caractérisé par le fait qu'**un injecteur de lisier (1, 2, 4, 5), une charrue billonneuse (7, 8), une butteuse (9) et un outillage (10) d'ensemencement, d'enfouissement ou de repiquage sont regroupés en un ensemble unitaire apte à façonner, en une unique opération, des billons de terrain renfermant du lisier et un produit de récolte.

7. Appareil selon la revendication 6, **caractérisé par le fait qu'**un groupe est attelé à l'arrière d'une citerne à lisier, tractée ou automotrice, ledit groupe incluant un injecteur de lisier pourvu d'un certain nombre de fourchons réglables auxquels sont associés des tuyaux à lisier qui, du fait de leur aptitude au réglage, peuvent épandre le lisier à n'importe quel emplacement, dans le billon, et suivant le nombre de bandes souhaité.

8. Appareil selon la revendication 6 ou 7, **caractérisé par le fait qu'**un groupe est attelé à l'arrière d'une citerne à lisier, tractée ou automotrice, ledit groupe comprenant un injecteur de lisier offrant, en succession, des premières charrues et une charrue principale, ainsi qu'une butteuse ; et **par le fait que** ledit groupe comporte un outillage intégré d'ensemencement, d'enfouissement ou de repiquage dédié à des graines, à des tubercules, à des bulbes, à des racines ou à des plants.

9. Appareil selon l'une quelconque des revendications 6 à 8, **caractérisé par le fait qu'**un outillage, dévolu à l'épandage d'un engrais solide ou liquide, est installé en liaison avec l'outillage d'ensemencement, d'enfouissement ou de repiquage.

10. Appareil selon l'une quelconque des revendications 6 à 9, **caractérisé par le fait qu'**il comprend, séquentiellement : des tuyaux d'injection de lisier, une première charrue, des tuyaux supplémentaires d'injection de lisier, une charrue principale, une butteuse et un outillage d'ensemencement, d'enfouissement ou de repiquage.

11. Appareil selon l'une quelconque des revendications 6 à 10, **caractérisé par le fait que** la butteuse comprend des rouleaux configurés en des sabliers.

12. Appareil selon la revendication 11, **caractérisé par le fait que** les rouleaux, configurés en des sabliers, présentent des sections tronconiques en opposition adjacente.
